# EUROPÄISCHE PATENTSCHRIFT

(11) **EP 3 388 317 B1**
(45) Veröffentlichungstag und Bekanntmachung des Hinweises auf die Patenterteilung: **23.09.2020**
(21) Anmeldenummer: 18166461.6
(22) Anmeldetag: 10.04.2018
(51) Int. Cl.: B62D 33/04, B60P 3/20

(54) **KÜHLFAHRZEUGAUFBAU**
REFRIGERATION VEHICLE STRUCTURE
CONSTRUCTION DE VÉHICULE FRIGORIFIQUE

(30) Priorität: 10.04.2017 DE 102017107740
(43) Veröffentlichungstag der Anmeldung: 17.10.2018
(73) Patentinhaber: Kiesling Fahrzeugbau GmbH, 89160 Dornstadt-Tomerdingen (DE)
(72) Erfinder: Kiesling, Peter, 89081 Ulm (DE)
(74) Vertreter: Baur & Weber Patentanwälte PartG mbB

(56) Entgegenhaltungen:
- EP-A1- 0 375 621
- EP-A1- 2 116 452
- DE-A1- 4 334 269
- DE-U1- 9 000 643
- FR-A1- 2 343 914
- GB-A- 2 158 931

## Beschreibung

Die Erfindung betrifft ein Seitenwandelement für einen Kühlfahrzeugaufbau.

Aus dem allgemeinen Stand der Technik ist es bekannt, Kühlfahrzeuge mit typischerweise am Fahrzeugheck eine durch Türen oder eine Ladebordwand verschließbare Öffnung zu versehen. Das Kühlfahrzeug weist einen wärmeisolierenden Aufbau bestehend aus wärmeisolierenden Seitenwänden, Boden- und Deckenelementen sowie eine mit einer Eintrittsöffnung eines Kühlaggregats versehene Vorderseite auf. Die wärmeisolierenden Elemente können dabei als geschäumte vorgefertigte Einzelteile hergestellt werden, die auf einem Fahrgestell zu einem Kühlfahrzeug zusammengesetzt werden können.

Desweiteren ist aus der DE 101 03 007 A1 ein Eckabschluss für einen Koffer-Fahrzeugaufbau bekannt, bei dem im Eckbereich zwei rechtwinklig zueinander stehende, auf Stoß miteinander verbundene Wände im Bereich ihrer Wandkanten über den außen liegenden Eckabschluss miteinander verbunden sind. Der Eckabschluss besteht aus zwei Kantenabschlussblechen, die jeweils über das Kantenende einer Wand überstehen und im Kantenbereich der Wände befestigt sind.

Aus der EP 2 025 583 B1 ist ein Fahrzeugaufbau für Kühlfahrzeuge mit einem von Wandungen, einem Dach und einem Boden umgrenzten Laderaum bekannt. Die Wandungen umfassen mehrere metallische, miteinander verbundene Wandungsteile, die gefalzte Seitenrandbereiche zur Verbindung von benachbarten Wandungsteilen umfassen. Einander benachbarte Wandungsteile haben gegensinnig abgewinkelte Aufnahmetaschen bildende Seitenrandbereiche, die abgewinkelten Enden der Seitenrandbereiche jeweils wechselseitig klammerartig in die jeweilige Aufnahmetasche des anderen Wandungsteils greifen. Die Aufnahmetasche erstreckt sich mit samt dem abgewinkelten Ende eines Wandungsteils oberhalb einer Wandungsteilebene des anderen Wandungsteils, aber parallel zu dieser. Die andere Wandungsteilebene reicht in etwa bis an die benachbarte Wandungsebene des benachbarten Wandungsteils. Einander benachbarte Wandungsteile sind zur Anordnung von Laderaumbefestigungselementen wie Zurrschienen in einem die abgewinkelten Enden der Seitenrandbereiche und die Aufnahmetaschen umfassenden Wandungsbereiche derart verformt, dass die Wandungsbefestigungselemente im wesentlichen flächenbündig zu der dem Laderaum zugewandten Wandungsebene der Wandungsteile verlaufen.

Aus der DE 20 2011 000 072 U1 ist eine Eckwinkelschienen für kastenartige Fahrzeugaufbauten bekannt, wobei die Eckwinkelschiene zur Befestigung an der Innenseite der Aufbauwandung in deren Eckbereichen vorgesehen ist, wobei die Eckwinkelschiene als Schienenprofil mit Winkelschenkeln und einem angeformten Leitungskanal ausgebildet ist, dessen Kanalstege von den Winkelschenkeln quer abstehen.

Aus der EP 2 842 804 A1 ist ein Boden oder eine Wand, insbesondere eine Stirnwand oder Seitenwand eines Nutzfahrzeugs bekannt, wobei in einer Decklage wenigstens eine Aussparung vorgesehen ist und wobei in der Aussparung eine Aufnahme mit einem Befestigungsmittel zum Befestigen eines Ladungssicherungsmittel vorgesehen ist. Damit der Boden oder die Wand stabil und leicht zu fertigen ist sowie gleichzeitig hohe Auszugskräfte aufnehmen kann, ist vorgesehen, dass der in Aussparung aufgenommene Teil der Aufnahme über eine innerhalb der Decklage vorgesehene Verbindung in der Decklage gehalten ist und dass die Verbindung wenigstens abschnittsweise an einer Außenseite der Aufnahme vorgesehen ist und/oder an einer Unterseite der Aufnahme unterhalb des Befestigungsmittels vorgesehen ist.

Aus der DE 10 2013 105 819 A1 ist ein Wandelement für einen Nutzfahrzeugaufbau, insbesondere einen Kühlkofferaufbau, mit wenigstens einer Isolationsschicht bekannt, die zwischen einer inneren und einer äußeren Deckschicht angeordnet ist und wenigstens einen Bereich mit verringerter Schichtdicke aufweist, wobei im Bereich mit verringerter Schichtdicke ein Vakuumisolationspaneel in die Isolationsschicht eingebettet ist.

Aus der DE 101 09 709 A1 ist eine Seitenwand für Lastfahrzeuge mit einer als Sandwichverbund ausgebildeten Seitenwand bekannt, bestehend aus einer Mittelschicht aus Schaumkunststoff und diese außen einfassende Deckschichten, bei der die innenliegende Deckschicht aus glasfaserverstärktem Kunststoff besteht, in der ein einer Halteschiene entsprechender Ausschnitt vorgesehen ist, in dem sich der zugängliche Teil der Halteschiene befindet. Die Halteschiene ist beidseitig mit quer zur Schienenachsenrichtung sich erstreckenden Flanschen versehen, die sich bis unter den Kantenbereich des Ausschnitts erstrecken.

Aus der DE 20 2015 102 860 U1 ist ein Ladungssicherungssystem für einen Ladungsaufbau eines Nutzfahrzeugs, insbesondere einen Kühlaufbau mit isolierenden Wandelementen, bekannt, umfassen dein Muldenprofil, das entlang der einem Innenraum des Ladungsaufbaus zugewandten ersten Seite ein Aufnahmemittel aufweist, das eine Ladungssicherungsschiene formschlüssig aufnimmt, und das entlang einer der ersten Seite gegenüberliegenden zweiten Seite Befestigungsmittel aufweist, wobei das Muldenprofil in Längsrichtung entlang seiner Seitenränder mit einem Verbindungsmittel zur Befestigung an einer Deckschicht des Ladungsaufbaus versehen ist, wobei die Befestigungsmittel in einem unterhalb der Deckschicht angeordneten Schaumkern eingreifen.

Die EP 2 116 452 A1 offenbart die Merkmale des Oberbegriffs des Anspruchs 1 und gibt ein Bodenelement und Anschluss zwischen einem Bodenelement und einer Seitenwand eines isolierten Kofferaufbaus für ein Fahrzeug an, bei dem das L-förmige Anschlusselement mit seiner vertikal verlaufenden Fläche in einer Vertiefung der Seitenwand angeordnet ist, sodass eine ebene Fläche entsteht.

Die DE 90 00 643. U1 gibt einen Kühlcontainer mit einem Ladungssicherungsrahmen an, bei dem das Dachblech und die Seitenbleche über Eckverbindungsprofile aneinander angeschlossen sind.

Die FR 2 343 914 A1 gibt einen Aufbau eines thermisch isolierten Wandpaneels für Kühlfahrzeuge an, bei dem zwei miteinander zu verbindende Wandteile auf ihrer einander zugewandten Seite jeweils mit einem Schlitz und einer Zunge versehen sind, die formentsprechend ineinander eingeführt werden können. Zum Verbinden der beiden Wandteile werden diese über die Zunge und den Schlitz ineinander eingeführt, woraufhin der dazwischen gebildete Freiraum mit einer Isolation gefüllt wird.

In der DE 43 34 269 A1 wird eine Laderaumkonstruktion für ein Fahrzeug angegeben, bei dem eine Dachfläche über eine an ihren Außenseiten angeordnete Federkonstruktion in eine Nutkonstruktion der Seitenwände eingehängt wird. In der GB 2 158 931 A wird eine Wandkonstruktion für ein Fahrzeug angegeben, bei der im Bereich der Stoßfläche zweier aufeinanderstoßenden Wandteile ein Profilelement flächenbündig in einem nach innen ragenden Abschnitt des Wandelements eingebracht ist.

Ausgehend von diesem Stand der Technik haben sich der bzw. die Erfinder nun die Aufgabe gestellt, ein Seitenwandelement für einen Kühlfahrzeugaufbau bzw. ein Kühlfahrzeug mit derartigen Seitenwandelementen zu schaffen, das bezüglich der Wärmeisolation zwischen Ladungsraum und Umgebung verbesserte Eigenschaften aufweist.

Diese Aufgabe wird durch die Merkmale des Anspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird ein Seitenwandelement für einen Kühlfahrzeugaufbau mit den Merkmalen des Anspruchs 1 angegeben.

Es ist daher vorgesehen, das Seitenwandelement mit einem unteren Verbindungselement so im Bereich der Innenfläche auszubilden, dass zusammen mit der Deckschicht eine plane Fläche entsteht. Unter Seitenwand wird hier sowohl eine Fläche rechts und links parallel zu einer Hauptfahrrichtung als auch eine Stirnwand oder Heckwand verstanden. Das untere Verbindungselement weist dazu ein erstes Teilelement auf, das sich an die Innenfläche anschließt. In den meisten Fällen nahezu rechtwinklig ist dazu ein zweites Teilelement vorgesehen, das mit einem Bodenelement verbindbar ist. Dabei dient das zweite Teilelement zur Befestigung des Bodenelements, so dass das erfindungsgemäße Seitenwandelement auf einfache Weise auf einen Fahrzeugboden eines Kühlfahrzeugs aufbringbar ist. Dadurch, dass das erste Teilelement ohne Stufe mit der Deckschicht eine Planfläche bildet, kann die Breite des Laderaums des Kühlfahrzeugaufbaus im Vergleich zu Eckprofilen, die auf eine Innenfläche aufgebracht sind, um die entsprechende Dicke eines derartigen Eckprofils vergrößert werden. Folglich entsteht keine Stufe innerhalb des Kühlfahrzeugaufbaus, wobei der Begriff "keine Stufe" oder "plane Fläche" hier so zu verstehen ist, dass kleine Abweichungen durchaus möglich wäre, sofern sie kleiner als die Dicke des ersten Teilelements wären, da andernfalls kein Gewinn mehr im Vergleich zu einem auf die Innenfläche aufgeklebten oder genieteten Verbindungselement erreicht werden kann.

Falls die nutzbare Laderaumbreite zwischen gegenüberliegenden Seitenwandelementen unverändert bleibt, können die Seitenwandelemente jeweils mit größerer Schichtdicke ausgeführt werden, ohne dabei die Außenabmessung des Kühlfahrzeugaufbaus zu verändern. Der dadurch zu erzielende Gewinn an Schichtdicke der Wandelemente ermöglicht ein verbessertes Isolationsverhalten des Kühlfahrzeugaufbaus. Ein die Wärmeisolation charakterisierender Wärmedurchgangskoeffizient, oftmals auch K-Wert oder U-Wert genannt, ist insbesondere im Bereich der hier vorliegenden dünnen Wandstärken nichtlinear, so dass bereits ein geringer Zugewinn in der erreichbaren Wandstärke eine deutliche Verbesserung bezüglich der Wärmeisolation bewirken kann. Folglich kann bei aufgrund von Zulassungsvorschriften festgelegten Außenbreiten eines Kühlfahrzeugaufbaus der zur Verfügung stehende Laderaum zwischen den Innenflächen bei gleichzeitig erhöhter Wandstärke gleichbleiben. Neben der Verbesserung der Wärmeisolation ist ein derartig gebildetes Seitenwandelement auch in der Produktion einfacher herzustellen, da das untere Verbindungselement und die Deckschicht gemeinsam mit dem Dämmmaterial versehen werden können, wobei das Einbringen des Dämmmaterials typischerweise durch ein Schäumverfahren erfolgt. Es ist daher nicht notwendig, auf bereits mit Dämmmaterial versehene innere Deckschichten weitere Eckprofile aufzukleben, aufzunieten oder anderweitig zu befestigen, wie dies im Stand der Technik beschrieben wurde. Im Gegensatz dazu kann das erfindungsgemäße Seitenwandelement zusammen mit dem unteren Verbindungselement in einem Herstellungsschritt erzeugt werden. Neben der Verbesserung der Wärmeisolation könnte die erfindungsgemäße Lehre alternativ auch dazu genutzt werden, den Laderaum bei gleichem Wärmeisolationsverhalten über die ganze Höhe zu verbreitern.

Gemäß einer Ausführungsform der Erfindung ist das an einem einer Oberkante des Wandelements zugewandten weiteren Abschnitt mit einem oberen Verbindungselement mit einem flächenhaften weiteren ersten Teilelement zum Anschluss an die Innenfläche und einem aus der Innenfläche herausführenden und mit dem weiteren ersten Teilelement einen Schenkel bildenden weiteren zweiten Teilelement zum Anschluss an ein Dachelement versehen, wobei sich das weitere erste Teilelement an die innenliegende Deckschicht stufenlos und mit der Deckschicht eine plane Fläche bildend anschließt und das weitere zweite Teilelement mit dem eine Fahrzeugdecke des Kühlfahrzeugaufbaus bildenden Dachelement verbindbar ist.

Demnach wird das bisher beschriebene Konzept auch auf die Ausgestaltung der Verbindung zwischen Seitenwand und Fahrzeugdecke erweitert, so dass auch hier beispielsweise eine verbesserte Wärmeisolation bei gleichbleibender Laderaumbreite ermöglicht wird. Neben der Verbesserung der Wärmeisolation könnte die erfindungsgemäße Lehre alternativ auch dazu genutzt werden, den Laderaum bei gleichem Wärmeisolationsverhalten über die ganze Höhe zu verbreitern. Erfindungsgemäß ist dazu wiederum das erste Teilelement des oberen Verbindungselements vorgesehen, das sich stufenlos im oberen Abschnitt der Seitenwand an die Innenfläche anschließt. Rechtwinklig dazu ist ein zweites Teilelement ausgebildet, das mit einem Dachelement verbindbar ist, so dass das erfindungsgemäße Seitenwandelement auch hier auf einfache Weise auf eine Fahrzeugdecke des Kühlfahrzeugaufbaus aufgebracht werden kann. Gemäß dieser Ausführungsform kann das erfindungsgemäße Seitenwandelement zusammen mit dem unteren und dem oberen Verbindungselement in einem Herstellungsschritt erzeugt werden, was die Komplexität der Herstellung und folglich die Herstellungskosten weiter reduziert.

Gemäß einer weiteren Ausführungsform der Erfindung ist das zweite Teilelement des unteren Verbindungselements auf der Oberfläche des Bodenelements und/oder bei dem das zweite Teilelement des oberen Verbindungselements auf der Oberfläche des Dachelements befestigbar, vorzugsweise verklebbar.

Alternativ dazu kann das zweite Teilelement des unteren Verbindungselements mit der Oberfläche des Bodenelements und/oder das zweite Teilelement des oberen Verbindungselements mit der Oberfläche des Dachelements eine plane Fläche bilden.

Während zur Optimierung der Wärmeisolation das erste Teilelement sowohl des unteren als auch des oberen Verbindungselements zusammen mit der die Innenfläche bildenden Deckschicht im Wesentlichen stufenlos ausgebildet ist, kann das zweite Teilelement auf unterschiedliche Weisen sowohl mit dem Bodenelement als auch mit dem Dachelement verbunden werden. So ist es zum einen möglich, das zweite Teilelement auf das die Fahrzeugdecke bzw. den Fahrzeugboden bildende Element aufzubringen. Dazu kann beispielsweise das zweite Teilelement auf die Oberflächen des Fahrzeugbodens bzw. der Fahrzeugdecke aufgeklebt werden. In anderen Ausführungsformen käme aber auch eine Verschraubung oder Vernietung in Frage. Dass hierbei nun die Laderaumhöhe zwischen Fahrzeugboden und Fahrzeugdecke um die Materialstärke des zweiten Teilelements reduziert ist, ist für die meisten Anwendungsfälle unerheblich. Insbesondere am Fahrzeugboden ist aufgrund der hohen mechanischen Belastungen eine stabile Verbindung zwischen zweiten Teilelement und Bodenelement für eine lange Haltbarkeit des so hergestellten Kühlfahrzeugaufbaus wichtig. Ebenso ist die wärmeisolierende Eigenschaft am Fahrzeugboden bzw. Fahrzeugdecke weniger kritisch zu sehen. Zum anderen ist es jedoch auch möglich, eine Ausführungsform zu wählen, die derjenigen des ersten Teilelements, d. h. einem Aufbau ohne Stufe entspricht. Somit kann gemäß dieser Ausführungsform ein Laderaum geschaffen werden, der beispielsweise eine vollständig plane Oberfläche im Bereich der Seitenwände, des Bodens und der Decke aufweist. Eine derartige Ausgestaltung eines Laderaums ermöglicht insbesondere eine einfache Reinigung, da keine Kanten, Einsenkungen oder dergleichen gebildet werden, die sich mit Flüssigkeit anfüllen könnten. Die beiden Ausführungsformen lassen sich selbstverständlich auch kombinieren, so dass beispielsweise im Bereich des Fahrzeugbodens eine andere Befestigung des zweiten Teilelements gewählt werden kann als im Bereich der Fahrzeugdecke.

Gemäß einer weiteren Ausführungsform der Erfindung ist das erste Teilelement am oberen Verbindungselement und/oder unteren Verbindungselement auf der vom zweiten Teilelement abgewandten Seite mit einer Haltenut versehen, in den ein in Richtung des Dämmmaterials abgewinkeltes Ende der innen liegenden Deckschicht eingreifen kann.

Das erste Teilelement bildet hier mit der innenliegenden Deckschicht eine plane Fläche, indem die innenliegende Deckschicht in einen entsprechenden Halteschlitz am ersten Teilelement eingreifen kann. Dazu wird die innen liegende Deckschicht in Richtung des Dämmmaterials, d. h. von der inneren Oberfläche des Laderaums weg gerichtet, in das Innere des Seitenwandelements umgebogen. Eine einfache Befestigung kann dadurch erreicht werden, dass der Halteschlitz bzw. das abgewinkelte Ende der innen liegenden Deckschicht im rechten Winkel zur Hauptfläche des Seitenwandelements angeordnet wird. Das abgewinkelte Ende kann im Inneren des Halteschlitzes beispielsweise mittels eines Klebers fixiert sein.

Alternativ kann aber auch das das erste Teilelement am oberen Verbindungselement und/oder unteren Verbindungselement auf der vom zweiten Teilelement abgewandten Seite in die innenliegenden Deckschicht einhängbar oder einführbar ist.

Hierzu kann die innenliegenden Deckschicht mit einem geeigneten hinterschnittenen Abschnitt versehen sein oder als Spangenprofil ausgebildet sein, in die vorspringende Kanten am ersten Teilelementen eingehängt oder eingeführt werden.

Gemäß einer weiteren Ausführungsform der Erfindung ist das erste Teilelement am oberen Verbindungselement und/oder unteren Verbindungselement mit hinterschnittenen Halteelementen versehen, die in das Dämmmaterial eingreifen und von diesem umgeben sind.

Bei der Herstellung des erfindungsgemäßen Seitenwandelements wird typischerweise die innen liegende Deckschicht zusammen mit den Verbindungselementen in einem ersten Schritt bereitgestellt, wobei unter Verwendung geeigneter Abstandshalter nachfolgend das Dämmmaterial in den Bereich zwischen innere und äußere Deckschicht eingeschäumt wird. Nach Aushärten des Dämmmaterials ist das Seitenwandelement für weitere Verarbeitungsschritte fertig gestellt. Während des Aushärtens umschließt nun das Dämmmaterial die am oberen bzw. unteren Verbindungselement angeordneten hinterschnittenen Halteelemente, so dass die Verbindungselemente einen mechanisch stabilen Bestandteil des Seitenwandelements bilden. Diese Vorgehensweise erlaubt eine kostengünstige Herstellung des erfindungsgemäßen Seitenwandelements, die sich hauptsächlich durch eine wenig komplexe Prozessführung ergibt. Versuche haben gezeigt, dass die mechanische Beanspruchbarkeit der Verbindungselemente groß genug ist, um alle in der Praxis relevanten Kräfte aufnehmen zu können.

Gemäß einer weiteren Ausführungsform der Erfindung sind das untere Verbindungselement und/oder das obere Verbindungselement so ausgebildet, dass deren erstes Teilelement entlang der Längsrichtung des Kühlfahrzeugaufbaus das Wandelement vollständig überdeckt.

Die ersten Teilelemente am unteren bzw. oberen Verbindungselement schaffen demnach eine Art Begrenzungsrahmen, der am oberen bzw. unteren Rand des Seitenwandelements angeordnet ist. Die Länge der Verbindungselemente kann dabei so gewählt sein, dass die komplette Länge des Kühlfahrzeugaufbaus durch ein einzelnes Seitenwandelement abgedeckt werden kann. Demnach ist es nicht erforderlich, die Seitenwände eines Kühlfahrzeugaufbaus durch mehrere Seitenwandpaneele zu bilden und diese zusammenzusetzen.

Gemäß einer Ausführungsform der Erfindung kann eine Höhe des ersten Teilelements des unteren Verbindungselements so gewählt sein, dass das untere Halteelement als Scheuerleiste dient.

Üblicherweise werden Kühlfahrzeugaufbauten im unteren Bereich der Seitenwände mit Scheuerleisten versehen, die beim Beladen beispielsweise mit Rollcontainern einen Schutz gegen Kontakt mit den Seitenflächen bilden. Gemäß der Erfindung lässt sich im Bereich der Seitenwände eine Scheuerleiste als integraler Bestandteil des unteren Verbindungselements bilden, wobei durch die Ausgestaltung als Planfläche die volle Laderaumbreite zur Verfügung steht.

Gemäß einer weiteren Ausführungsform der Erfindung ist ein unteres Außenverbindungselement mit einem weiteren flächenhaften ersten Teilelement zum Anschluss an die Außenfläche und einem aus der Außenfläche herausführenden und mit dem ersten Teilelement einen Schenkel bildenden weiteren zweiten Teilelement zum Anschluss an das Bodenelement vorgesehen, wobei sich das erste Teilelement an die außenliegende Deckschicht stufenlos und mit der Deckschicht eine plane Fläche bildend anschließt und das zweite Teilelement mit dem Bodenelement des Fahrzeugboden des Kühlfahrzeugaufbaus verbindbar ist.

Das untere Außenverbindungselement ist ähnlich wie das untere Verbindungselement mit zwei Teilelementen ausgestattet, die nun jedoch die Verbindung zur außen liegenden Deckschicht bzw. zur Unterseite des Fahrzeugbodens herstellen. Demnach handelt es sich beim unteren Anschlussverbindungselement zu einem zum unteren Verbindungselement gegenüberliegend angeordneten Bauteil, das wiederum im Bereich der Außenfläche des Seitenwandelements eine plane Fläche bildet. Ähnlich wie bereits im Zusammenhang mit dem unteren Verbindungselement erläutert, kann auch das untere Außenverbindungselement bei gleichbleibenden Außenabmessungen für eine verbesserte Wärmeisolation herangezogen werden, indem die Abstände zwischen innen- bzw. außen liegender Deckschicht entsprechend erhöht werden können.

Gemäß einer weiteren Ausführungsform der Erfindung ist ein oberes Außenverbindungselement mit einem weiteren flächenhaften ersten Teilelement zum Anschluss an die Außenfläche und einem aus der Außenfläche herausführenden und mit dem ersten Teilelement einen Schenkel bildenden weiteren zweiten Teilelement zum Anschluss an das Dachelement vorgesehen, wobei sich das erste Teilelement an die außenliegende Deckschicht stufenlos und mit der Deckschicht eine plane Fläche bildend anschließt und das zweite Teilelement mit dem Dachelement der Fahrzeugdecke des Kühlfahrzeugaufbaus verbindbar ist.

Zusätzlich oder alternativ zum unteren Außenverbindungselement kann auch das obere Außenverbindungselement vorgesehen sein, das ebenfalls mit zwei Teilelementen ähnlich dem oberen Verbindungselement auf gegenüber liegenden Seiten angeordnet ist. Wie bereits im Zusammenhang mit den unteren bzw. oberen Verbindungselementen beschrieben, lässt sich auch hier das Seitenwandelement mit unterschiedlichen Ausführungsformen kombinieren.

Gemäß einer weiteren Ausführungsform der Erfindung sind das erste Teilelement und das zweite Teilelement des unteren Verbindungselements einstückig geformt oder zusammenfügbar, vorzugsweise verschraubbar.

Da das untere Verbindungselement mit dem Fahrzeugboden in Verbindung steht, ist hier die mechanische Beanspruchung, insbesondere beim Beladen des Kühlfahrzeugaufbaus oder beim Betreten des Kühlfahrzeugaufbaus durch Bedienpersonal am größten. Hierbei kann das zweite Teilelement entweder schenkelförmig an das erste Teilelement angefügt sein, so dass das untere Verbindungselement als einstückiges Strangpressprofil bereitgestellt werden kann. In anderen Ausführungsformen ist es jedoch auch vorgesehen, das zweite Teilelement mit dem ersten Teilelement lösbar zu verbinden, wobei hier entweder eine entsprechende Gestaltung mit korrespondierenden Elementen verwendet werden kann, in die das zweite Teilelement in Bezug auf das erste Teilelement eingeklemmt wird. Eine Verschraubung wäre ebenfalls möglich.

Gemäß einer weiteren Ausführungsform der Erfindung sind das erste Teilelement und das zweite Teilelement des oberen Verbindungselements, des unteren Außenverbindungselements und des oberen Außenverbindungselements einstückig geformt.

Das erste Teilelement und das zweite Teilelement können dabei einstückig ausgeführt sein, so dass das untere Verbindungselement als rechtwinkliges Profil bereitgestellt werden kann. In wiederum anderen Ausführungsformen ist es jedoch möglich, das zweite Teilelement beispielsweise über winkelförmige Zwischenstücke mit dem ersten Teilelement mittels Verschraubungen zu verbinden. Die mechanische Belastung ist im außen liegenden Teil des unteren Abschnitts bzw. im oberen Abschnitt geringer, so dass hier bevorzugt ein einstückiges Strangpressprofil für die Verbindungselemente zum Einsatz kommen kann. Das Anbringen des Dachelements kann durch Verwendung eines zweiteiligen Aufbaus des oberen Verbindungselements unter Umständen einfacher durchzuführen sein.

Gemäß einer weiteren Ausführungsform der Erfindung sind zwischen dem oberen Halteelement und dem unteren Halteelement weitere Profilelemente vorgesehen, die so in das Seitenwandelement eingefügt sind, dass sie sich ohne eine Stufe zu bilden, an die innen liegende Deckschicht darüberliegend bzw. darunterliegend anfügen.

Dabei können weitere Profilelemente zur Ladungssicherung oder als Schutzleisten ausgebildet sein.

Die weiteren Profilelemente können an ihren Längsseiten mit einer Haltenut versehen sein, in die abgewinkelte Enden der innen liegenden Deckschicht eingreifen können.

Dabei können die weiteren Profilelemente mit hinterschnittenen Halteelementen versehen sein, die in das Dämmmaterial eingreifen und von diesem umgeben sind.

Gemäß diesen Ausführungsformen wird das Konzept der Erfindung dahingehend erweitert, dass weitere, für einen Innenausbau eines Kühlfahrzeugaufbaus vorgesehene Profilelemente bereits ähnlich wie das untere Verbindungselement bzw. das obere Verbindungselement in die die Innenfläche bildende Deckschicht des Seitenwandelements eingefügt werden. Die Verbindungstechnik mit Halteelementen, hinterschnittenen sowie abgewinkelten Enden der Deckschichten ist dabei identisch zu den oben beschriebenen Ausführungsformen. Folglich wird ein Seitenwandelement geschaffen, das sämtliche, für die Nutzung eines Kühlfahrzeugaufbaus vorgesehenen Elemente umfasst, die zur Ladungssicherung vorgesehen sein müssen. Die weiteren Profilelemente verringern hierbei wiederum nicht die Innenabmessungen des Laderaums und können gemeinsam mit den Verbindungselementen in kostengünstigen Herstellungsschritten während des Bildens von Seitenwandelementen als ein vollständig integriertes Wandpaneel gefertigt werden.

Desweiteren wird ein Kühlfahrzeugaufbau angegeben, der mit einem wärmeisolierenden Aufbau versehen ist, der oben beschriebene Seitenwandelemente aufweist. Dabei kann der von einer Hauptfahrrichtung aus seitlich, vorne oder hinten wenigstens ein derartiges Seitenwandelement vorgesehen sein.

Gemäß einer weiteren Ausführungsform des erfindungsgemäßen Kühlfahrzeugaufbaus ist im Fahrzeugboden und/oder in der Fahrzeugdecke wenigstens eine Halteschiene angeordnet, in die eine lösbare Vorrichtung zur Ladungssicherung oder zur Laderaumtrennung einführbar ist.

Die Halteschienen können mehrere übereinander liegende Gleitebenen aufweisen, in die eine lösbare Vorrichtung zur Ladungssicherung oder zur Laderaumtrennung einführbar ist.

Dabei kann die lösbare Vorrichtung eine Trennwand oder eine Absperrstange sein, die mittels Gleiter, Rollwägen, Nutensteinen oder Schraubenköpfen in den Halteschienen geführt ist, wobei für starre und bewegliche Führungen unterschiedliche Gleitebenen vorgesehen sind.

Vorzugsweise werden die unterschiedlichen Gleitebenen dafür verwendet, Befestigungsmittel, die eine starre Führung erfordern, von denen mit einer beweglichen Führung zu trennen. So ist es gemäß einer Ausführungsform der Erfindung möglich, die dem Laderaum am nächsten liegende Gleitebene beispielsweise für die Klemmung mittels Nutensteine oder dergleichen auszubilden. Die darüber liegend angebrachte Gleitebene kann dann für Rollwägen oder dergleichen verwendet werden. Da bei häufigen Einsätzen von Klemmprofilen das Innere der Gleitschienen mechanisch stark belastet ist, wird eine gleichzeitige Führung von beweglichen und starren Führungsmitteln verhindert, so dass beispielweise als Polyamidgleiter ausgebildete Führungen nicht aufgrund von Furchen, die durch häufiges Klemmen mit Nutensteinen entstehen, eine geringe Standfestigkeit aufweisen und häufig ausgetauscht werden müssen.

Schließlich wird eine Halteschiene zur Verwendung in einem Kühlfahrzeugaufbau wie oben beschrieben angegeben, die im Fahrzeugboden und/oder in der Fahrzeugdecke angeordnet ist, wobei die Halteschiene wenigstens zwei übereinanderliegende Gleitebenen aufweist, in die eine lösbare Vorrichtung zur Ladungssicherung oder zur Laderaumtrennung einführbar ist, wobei für starre und bewegliche Führungen unterschiedliche Gleitebenen vorgesehen sind.

Nachfolgend werden einige Ausführungsbeispiele anhand der Zeichnungen näher erläutert. Es zeigen:
- Fig. 1: ein Seitenwandelement mit einem unteren Verbindungselement in einer Querschnittsansicht gemäß einer ersten Ausführungsform der Erfindung,
- Fig. 2: ein Seitenwandelement in einem oberen Verbindungselement in einer Querschnittansicht gemäß einer zweiten Ausführungsform der Erfindung,
- Fig. 3: ein Kühlfahrzeugbereich in einem unteren Abschnitt gemäß einer weiteren Ausführungsform der Erfindung in einer Querschnittansicht,
- Fig. 4: ein Kühlfahrzeugaufbau in einem oberen Abschnitt gemäß einer weiteren Ausführungsform der Erfindung in einer Querschnittsansicht,
- Fig. 5: ein Profilelement als Bestandteil eines erfindungsgemäßen Seitenwandelements in einer Querschnittansicht,
- Fig. 6: ein weiteres Profilelement als Bestandteil eines Seitenwandelements gemäß einer Ausführungsform der Erfindung
- in: einer Querschnittansicht,
- Fig. 7A bis: F eine Halteschiene gemäß der Erfindung zur Verwendung mit unterschiedlichen Befestigungselementen in Querschnittansichten, und
- Fig. 8A und B: jeweils eine Querschnittansicht einer weiteren Halteschiene einer Ausführungsform der Erfindung.

In den Figuren sind gleiche oder funktional gleichwirkende Bauteile mit den gleichen Bezugszeichen versehen.

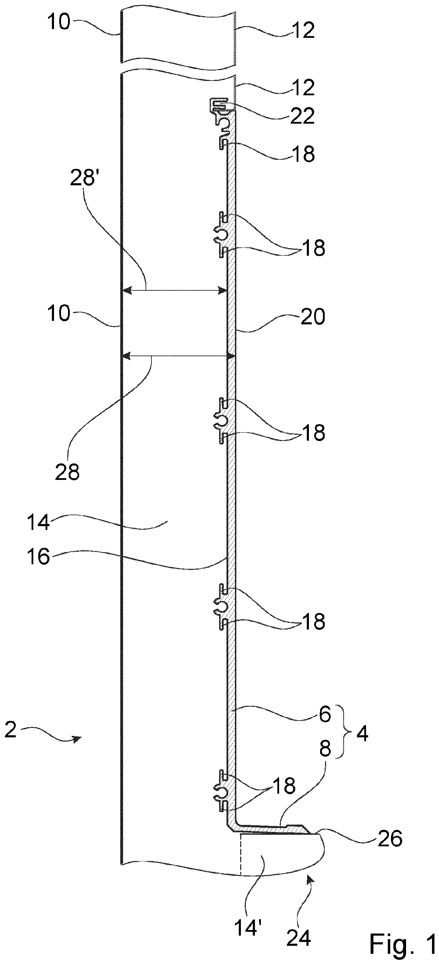

Unter Bezugnahme auf Fig. 1 ist nachfolgend eine erste Ausführungsform eines erfindungsgemäßen Seitenwandelements 2 gezeigt. Das Seitenwandelement 2 ist hier in einer Querschnittansicht dargestellt, wobei das Seitenwandelement 2 nicht über die vollständige Laderaumhöhe eines Kühlfahrzeugaufbaus, sondern in einem unteren Abschnitt gezeigt ist. Der untere Abschnitt wurde bei Betrachtung des Kühlfahrzeugaufbaus von hinten in Richtung einer Hauptfahrtrichtung links unten liegen. Das Seitenwandelement 2 weist ein unteres Verbindungselement 4 auf, das im gezeigten Beispiel einstückig aus einem ersten Teilelement 6 und einem zweiten Teilelement 8 gebildet wird. Das erste Teilelement 6 und das zweite Teilelement 8 bilden zusammen im Wesentlichen rechtwinklige Schenkel, wobei das zweite Teilelement 8 sich an die Unterkante des ersten Teilelements 6 anschließt. Als Seitenwandelement 2 gemäß der Erfindung kommen alle Wandelemente eines Kühlfahrzeugs in Frage, also auch Heck- oder Stirnseiten, wobei am hinteren Ende gegebenenfalls Türen oder dergleichen gebildet sind.

Desweiteren umfasst das Seitenwandelement 2 eine eine Außenfläche bildende Deckschicht 10 und eine eine Innenfläche bildende Deckschicht 12. Die innenliegende Deckschicht 12 und die außenliegende Deckschicht 10 werden typischerweise als dünne metallische Platten bereitgestellt.

Zwischen der innenliegenden Deckschicht 12 und der gegenüberliegenden außenliegende Deckschicht 10 ist ein Dämmmaterial 14 angeordnet, das auf fachübliche Weise durch Schäumen gebildet werden kann. Dazu wird geeignetes flüssiges Ausgangsmaterial aufgebracht, das nach Aufschäumen den Bereich zwischen den Deckschichten 10 und 12 ausfüllen kann.

Zur Fixierung des unteren Verbindungselements 4 ist wenigstens das erste Teilelement 6 auf seiner Rückseite 16 mit Halteelementen 18 versehen, die bezüglich der Rückseite 16 des ersten Teilelements Hinterschnitte bilden. Die Hinterschnitte werden während des Schäumens mit dem Dämmmaterial 14 gefüllt, so dass die Halteelemente nach Aushärten innerhalb des Dämmmaterials 14 zu liegen kommen und somit durch den Schaumkern des Dämmmaterials 14 gehalten werden.

Das untere Verbindungselement 4 ist bezüglich des ersten Teilelements 6 so angeordnet, dass die Vorderseite 20 zusammen mit der die Innenfläche bildende innenliegende Deckschicht 12 eine plane Fläche bildet, ohne dass dabei zwischen der innenliegenden Deckschicht 12 und dem ersten Teilelement 6 eine Stufe entsteht. Der Übergang zwischen dem ersten Teilelement 6 und der die Innenfläche bildenden Deckschicht 12 kann dabei so ausgeführt sein, dass die innenliegende Deckschicht 12 in Richtung des Dämmmaterials 14 beispielsweise rechtwinklig gebogen ist, so dass diese am oberen Ende des ersten Teilelements 6 in eine dort vorgesehene Haltenut 22 eingeführt werden kann. Somit können innenliegende Deckschicht 12 und unteres Verbindungselement 4 gemeinsam ausgerichtet werden, bevor das Einschäumen mit Dämmmaterial 14 erfolgt. Somit bilden das erste Teilelement 6 und das zweite Teilelement 8 einen Schenkel, wobei das zweite Teilelement 8 aus der Ebene des ersten Teilelements 6 herausführt.

Auf diese Weise wird ein Seitenwandelement 2 gebildet, bei dem das erste Teilelement zum Anschluss an die die Innenfläche bildende Deckschicht 12 herangezogen wird und bei dem das zweite Teilelement 8 zum Anschluss an ein Bodenelement 24 vorgesehen ist, das mit seiner Oberseite 26 unterhalb des zweiten Teilelements 8 angeordnet ist. Das Bodenelement 24 kann wiederum mit einem ähnlich gebildeten Dämmmaterial 14' versehen sein. Die Verbindung zwischen der Oberseite 26 des Bodenelements 24 und der Unterseite des zweiten Teilelements 8 kann auf unterschiedliche Weise erfolgen, wobei neben einer Verklebung auch ein Vernieten oder Verschrauben in Frage kommt.

Die Höhe des ersten Teilelements 6 des unteren Verbindungselements 4 kann dabei zwischen zweitem Teilelement 8 und Haltenut 22 so gewählt sein, dass das erste Teilelement 6 als Scheuerleiste in einem unteren Abschnitt eines Kühlfahrzeugaufbaus dient. Da die Vorderseite 20 des ersten Teilelements 6 mit der innenliegenden Deckschicht 12 eine plane Fläche bildet, kann die Wandstärke 28 des Seitenwandelements 2 im Vergleich zu Eckprofilen, die auf ein Seitenwandpaneel aufgeklebt sind, größer gewählt werden, da sich die Gesamtwandstärke nun nicht mehr aus Seitenwandpaneel und Eckprofil zusammensetzt.

Während im Stand der Technik eine Seitenwandstärke über die gesamte Höhe des Seitenwandelements 2 realisiert werden könnte, die der eingezeichneten Wandstärke 28' entsprechen würde, kann gemäß der Erfindung eine Wandstärke 28 realisiert werden, die entsprechend größer ist. Der dadurch zu erzielende Gewinn der der Wandstärke des Seitenwandelements 2 ermöglicht ein verbessertes Isolationsverhalten des Kühlfahrzeugaufbaus, da ein die Wärmeisolation charakterisierender K-Wert oder U-Wert im Bereich der hier vorliegenden Wandstärken ein nicht-lineares Verhalten aufweist, so dass bereits ein geringer Zugewinn an erreichbarer Wandstärke eine deutliche Verbesserung bezüglich der Wärmeisolation bewirken kann.

Demnach kann bei festgelegten Außenbreiten bei gleichem zur Verfügung stehendem Laderaum eine verbesserte Isolationswirkung des Seitenwandelements 2 erreicht werden. Neben der Verbesserung der Wärmeisolation ist ein derartig gebildetes Seitenwandelement 2 auch in der Produktion kostengünstig herzustellen, das das untere Verbindungselement 4 und die innen liegende Deckschicht 12 gemeinsam mit dem Dämmmaterial 14 versehen werden können, wobei anschließend das untere Verbindungselement 4 mittels des zweiten Teilelements 8 beispielsweise auf die Oberseite 26 eines Bodenelements 24 aufgeklebt werden kann. Somit lässt sich auf einfache Weise ein Kühlfahrzeugaufbau zusammenstellen.

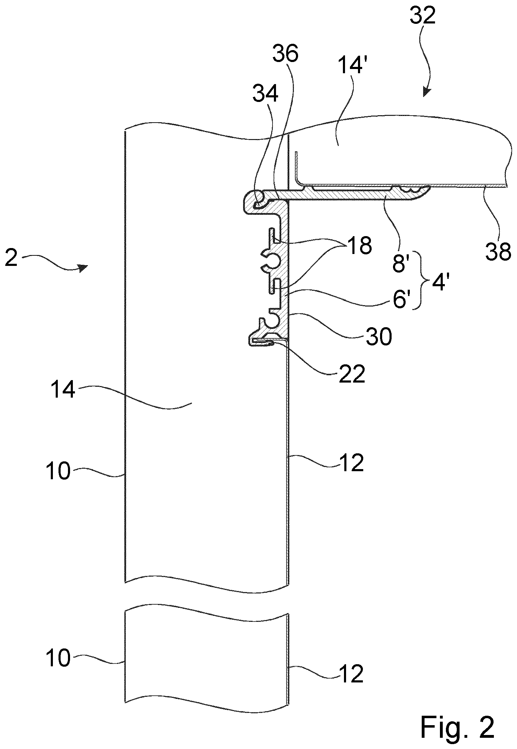

Unter Bezugnahme auf Fig. 2 wird nachfolgend eine weitere Ausführungsform eines erfindungsgemäßen Seitenwandelements 2 gezeigt. In Fig. 2 ist wiederum eine Querschnittansicht gezeigt, die von der Heckseite des Kühlfahrzeugaufbaus in Hauptfahrtrichtung betrachtet in der linken oberen Ecke liegen würde. Das Seitenwandelement 2 weist wiederum zwischen innenliegender Deckschicht 12 und außen liegender Deckschicht 10 das Dämmmaterial 14 auf. An die innenliegende Deckschicht 12 schließt sich ein weiteres erstes Teilelement 6' an, das zusammen mit einem weiteren zweiten Teilelement 8' ein oberes Verbindungselement 4' bildet.

Das weitere zweite Teilelement 6' ist wiederum mit Hinterschnitte bildenden Halteelementen 18 versehen, wobei in Richtung der innen liegenden Deckschicht 12 eine Haltenut 22 vorgesehen ist. In die Haltenut 22 kann wiederum eine abgewinkelte Teilfläche der innenliegenden Deckschicht 12 eingebracht sein, wobei die Vorderseite 30 des weiteren ersten Teilelements 6' zusammen mit der innen liegenden Deckschicht 12 eine plane Fläche bildet.

Am oberen Ende wird das weitere zweite Teilelement 8' mit einem Dachelement 32 verbunden. Dazu weist die Ausführungsform des oberen Verbindungselements 4' am weiteren ersten Teilelement 6' eine Aussparung 34 auf, in die zungenförmig das weitere zweite Teilelement 8' so eingeführt werden kann, dass das weitere zweite Teilelement 8' mit der Unterseite auf einer Schulter 36 zu liegen kommt, so dass das weitere erste Teilelement 6' und das weitere zweite Teilelement 8' schenkelförmig in einem rechten Winkel zueinander angeordnet sind.

Das weitere Teilelement 8' kann beispielsweise mittels Verkleben auf die Unterseite 38 des Dachelements 32 angebracht werden. Durch die Kombination aus Aussparung 34, korrespondierenden vorspringenden Element am weiteren zweiten Teilelement 8' und Schulter 36 ist es möglich, das Dachelement 32 nach Schäumen mit Dämmmaterial 14' und Aufkleben des weiteren zweiten Teilelements 8' mit dem Seitenwandelement 2 zu verbinden.

Für das obere Verbindungselement 4' ist in anderen Anwendungsfällen wiederum eine Ausführungsform denkbar, die der einstückigen Vorgehensweise gemäß Fig. 1 für das untere Verbindungselement 4 folgen würde. In wiederum anderen Ausführungsformen wäre es denkbar, auch das zweite Teilelement 8 bzw. das weitere zweite Teilelement 8' gemäß Fig. 1 und gemäß Fig. 2 mittels nicht dargestellter Haltenuten 22 mit der Oberseite 26 des Bodenelements 24 bzw. der Unterseite 38 des Dachelements 32 so zu verbinden, das auch hier eine plane Fläche entsteht.

Die im Zusammenhang mit Fig. 1 und Fig. 2 vorgestellten Ausführungsformen lassen sich selbstverständlich auf unterschiedliche Weise kombinieren. So wäre es in manchen Ausführungsformen auch möglich, das untere Verbindungselement 4 im oberen Bereich mit einem konventionellen Eckprofil anstelle des oberen Verbindungselements 4' zu versehen. Das erfindungsgemäße Seitenwandelement 2 gemäß Fig. 1 und/oder gemäß Fig. 2 lässt sich somit auf einfache Weise mit einem Bodenelement 24 sowie einem Dachelement 32 verbinden, so dass auf diese Weise durch Bereitstellen eines weiteren Seitenwandelements auf der gegenüberliegenden Seite ein geschlossener Aufbau für ein Kühlfahrzeug geschaffen werden kann.

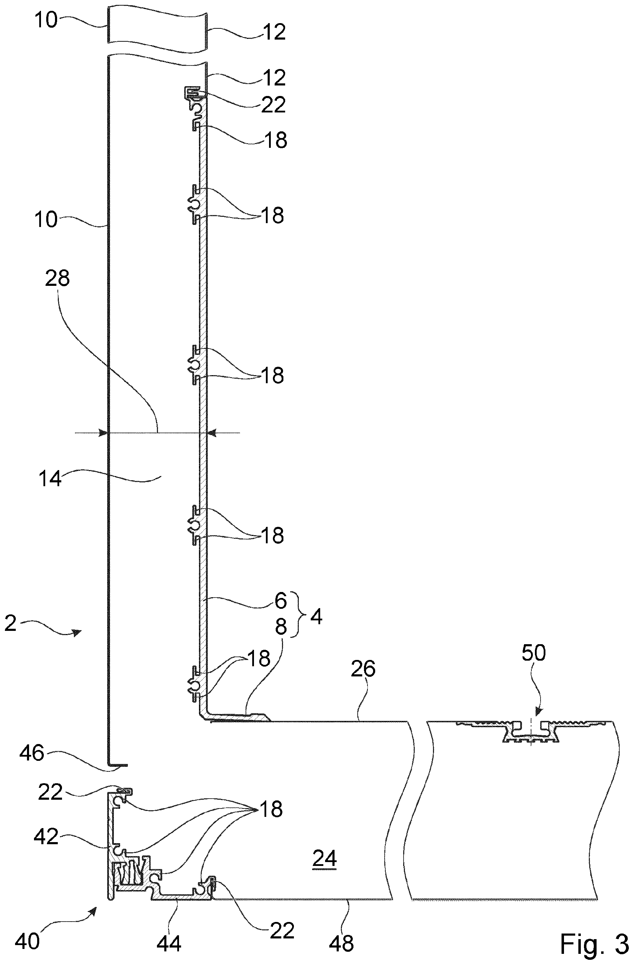

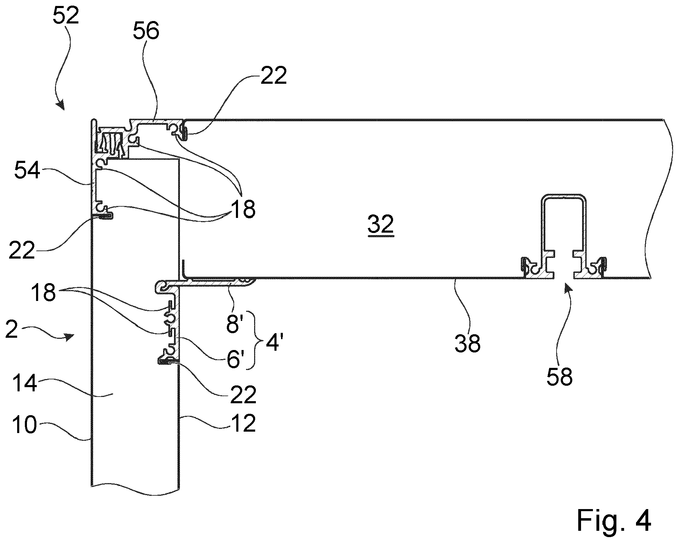

Die bisherigen Ausführungsformen zeigten dabei den Aufbau des Seitenwandelements 2 auf der dem Laderaum zugewandten Seite. Im Zusammenhang mit Fig. 3 und 4 wird nachfolgend das erfindungsgemäße Konzept dahingehend erweitert, dass auch eine Verbindung im Bereich der eine Außenfläche bildenden außenliegenden Deckschicht 10 geschaffen wird. Fig. 3 beschreibt dabei wiederum ähnlich wie Fig. 1 die linke untere Ecke, während Fig. 4 die linke obere Ecke ähnlich der Fig. 2 zeigt.

Unter Bezugnahme auf Fig. 3 wird nun ein unteres Außenverbindungselement 40 gezeigt, das wiederum aus einem ersten Teilelement 42 und einem rechtwinklig dazu angeordneten zweiten Teilelement 44 zusammengesetzt ist. Das erste Teilelement 42 des unteren Außenverbindungselements bildet dabei zusammen mit der außenliegenden Deckschicht 10 eine Planfläche, wobei wiederum eine Haltenut 22 vorgesehen ist, in die ein abgewinkeltes Ende 46, das in Fig. 3 vor Zusammenfügen beispielhaft dargestellt ist, eingreifen kann.

Somit bildet die außenliegende Deckschicht 10 zusammen mit dem ersten Teilelement 42 des unteren Außenverbindungselements 40 eine Planfläche. Das zweite Teilelement 44 des unteren Außenverbindungselements 40 ist ebenfalls mit einer Haltenut 22 versehen, die mit einer Unterseite 48 des Bodenelements 24 in Eingriff zu bringen ist.

Das erste Teilelement 42 bzw. das zweite Teilelement 44 des unteren Außenverbindungselements 40 sind wiederum mit Hinterschnitte bildenden Halteelementen 18 versehen, so dass diese vom Dämmmaterial 14 gehalten werden. Im Bodenelement 24 ist im Bereich der Oberseite 26 eine untere Halteschiene 50 vorgesehen, die nachfolgend noch näher erläutert werden wird.

Unter Bezugnahme auf Fig. 4 wird ein oberes Außenverbindungselement 52 dargestellt, das das im Zusammenhang mit Fig. 3 erläuterte untere Außenverbindungselement 40 entsprechend auf der Oberseite umsetzt. Dazu ist wiederum ein mit der außenliegenden Deckschicht 10 eine plane Fläche bildendes erstes Teilelement 54 des oberen Außenverbindungselements 52 vorgesehen, wobei auch hier wiederum die außenliegende Deckschicht 10 in eine entsprechende Haltenut 22 des ersten Teilelements 54 am oberen Außenverbindungselement 52 geführt sein kann. Ebenso ist auch im Bereich des zweiten Teilelements 56 des oberen Außenverbindungselements 52 eine entsprechende Haltenut 22 vorgesehen, um eine Oberseite des Dachelements tenut 22 vorgesehen, um eine Oberseite des Dachelements 32 aufnehmen zu können. Das obere Außenverbindungselement 52 weist wiederum Hinterschnitte bildende Halteelemente 18 auf.

Im Bereich des Dachelements 32 ist eine obere Halteschiene 58 ausgebildet, wie nachfolgend noch näher erläutert wird.

Aus den im Zusammenhang mit Fig. 1 bis 4 dargestellten Ausführungsformen des unteren Verbindungselements 4, des oberen Verbindungselements 4', des unteren Außenverbindungselements 40 und des oberen Außenverbindungselements 52 lässt sich somit auf einfache Weise sowohl auf der Innenseite als auch auf der Außenseite Planflächen bildende Seitenwände herstellen. Das untere Verbindungselement 4, das obere Verbindungselement 4', sowie das untere Außenverbindungselement 40 und das obere Außenverbindungselement 52 können dabei als Strangpressprofile bereitgestellt werden, die die komplette Längsrichtung eines Kühlfahrzeugaufbaus abdecken.

Somit ist es nicht nötig, einzelne Seitenwandpaneele entlang einer Längsachse des Kühlfahrzeugaufbaus miteinander zu verbinden, was zusätzliche Wärmebrücken zur Folge hätte. Da die Verbindungselemente je nach Lage am Kühlfahrzeugaufbau auch zweiteilig ausgeführt sein können, ist es ohne weiteres möglich, Seitenwandelemente 2, Bodenelemente 24 und Dachelemente 32 zusammen zu fügen, um einen geschlossenen Kühlfahrzeugaufbau zu bilden.

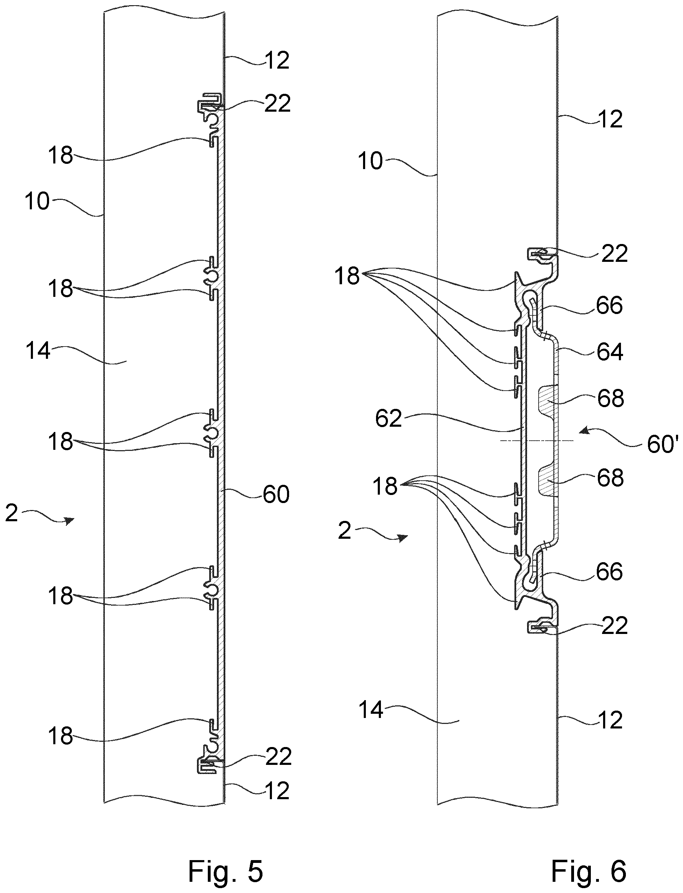

Neben den bisher beschriebenen unteren bzw. oberen Verbindungselementen 4 und 4' kann auch auf der innenliegenden Deckschicht 12 ein zusätzliches Profilelement 60 ausgebildet sein. Ein Beispiel für ein derartiges Profilelement 60 ist in Fig. 5 gezeigt. Das Profilelement 60 ist in diesem Beispiel als Scheuerleiste ausgeführt und wird typischerweise zwischen dem unteren Verbindungselement 4 und dem oberen Verbindungselement 4' angeordnet sein.

Ähnlich wie auch bereits die Befestigung der ersten Teilelemente 6 bzw. 6' sind wiederum Haltenuten 22 an der oben liegenden bzw. unten liegenden Kante angeordnet, in die abgewinkelte Enden der innenliegenden Deckschicht 12 eingeführt sein können. Über entsprechende Halteelemente 18, die wiederum Hinterschnitte bilden, wird das Profilelement 60 im Schaumkern des Dämmmaterials 14 gehalten. Wie Fig. 5 zu entnehmen ist, bildet das Profilelement 60 zusammen mit der innenliegenden Deckschicht 12 wiederum eine plane Fläche.

Eine weitere Ausführungsform eines Profilelements 60' ist in Fig. 6 gezeigt. Das Profilelement 60' wird hier durch eine einen Grundkörper bildende Aufnahme 62 gebildet, die zusammen mit einem Einsatz 64, der mittels Halteflächen 66 in der Aufnahme 62 fixiert ist, eine zur Ladungssicherung verwendete Ankerschiene bildet. Die Aufnahme 62 ist in Form einer Mulde auf der dem Dämmmaterial zugewandten Seite wiederum mit entsprechenden Hinterschnitte bildenden Halteelementen 18 versehen und weist an den oberen bzw. unteren Längskanten Haltenuten 22 für die Aufnahme von abgewinkelten Enden der innenliegenden Deckschicht 12 auf. Das Profilelement 60 kann somit auf fachübliche Weise Zurrgurte, Absperrstangen oder dergleichen mittels der entlang einer Längsachse ausgebildeten Öffnungen 68 aufnehmen.

Mittels der in Fig. 5 bzw. Fig. 6 gezeigten Ausführungsformen wird somit über den eigentlichen Zusammenbau des Kühlfahrzeugaufbaus mittels der erfindungsgemäßen Seitenwände 2 hinaus auch bereits für den sicheren Betrieb eines Kühlfahrzeugs benötigte Profilelemente in den Fertigungsprozess integriert. Somit wird ein Kühlfahrzeugaufbau geschaffen, der die einzelnen Ausbauelemente sowie die Grundkomponenten in einem voll integrierten Fertigungsverfahren bereitstellen kann.

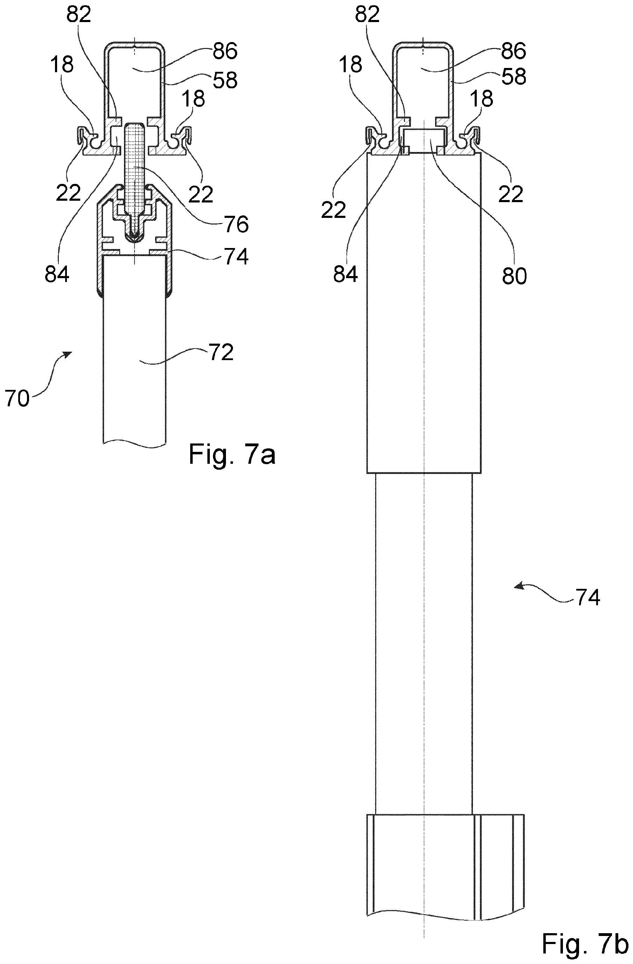

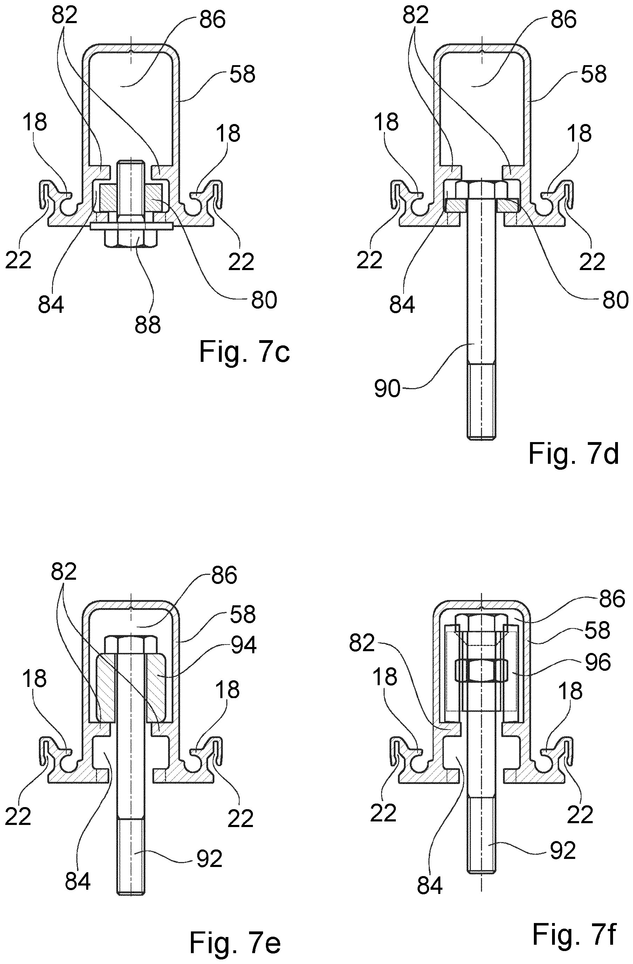

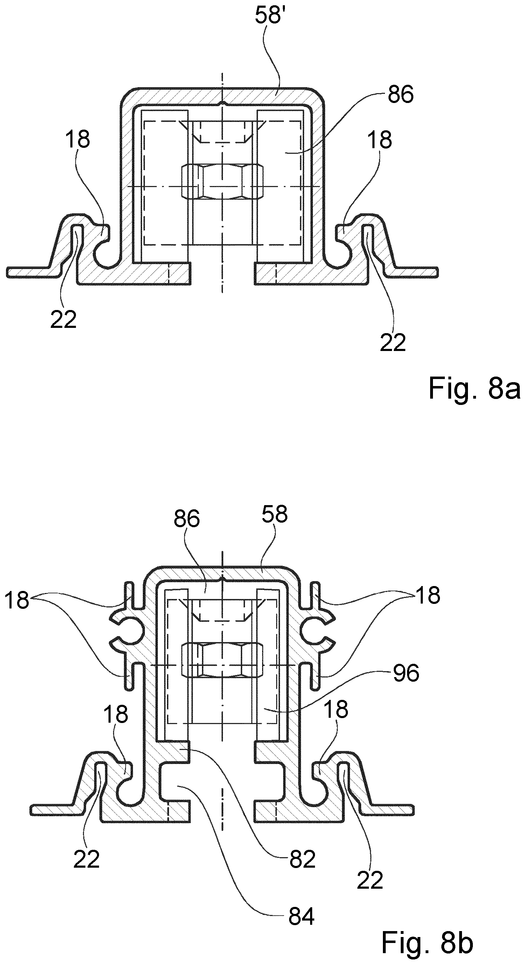

Nachfolgend werden unter Bezugnahme auf die Fig. 7 und 8 Ausführungsbeispiele für die im Dachelement 32 vorgesehenen oberen Halteschienen 58 bzw. für im Bodenelement 24 angebrachte untere Halteschienen 50 gezeigt. Hierbei ist es insbesondere vorgesehen, eine Vielzahl von oberen Halteschienen 58 anzubringen, so dass je nach gewünschter Gestaltung des Innenraums des Kühlfahrzeugaufbaus verschiedenartige Befestigungsmöglichkeiten bestehen. Nachfolgend werden unter Bezugnahme auf die Fig. 7A bis 7F einige dieser Auswahlmöglichkeiten zur Befestigung innerhalb der oberen Halteschienen 58 vorgestellt.

In Fig. 7A ist die obere Halteschiene 58 in einer Querschnittansicht gezeigt, wobei die Einbindung in das Dachelement 32 wiederum über entsprechende abgewinkelte Enden der Unterseite 38 erfolgen kann, die in die Haltenuten 22 eingreifen können. Ebenso sind wiederum Hinterschnitte bildende Halteelemente 18 vorgesehen, so dass die obere Halteschiene 58 im Dämmmaterial 14' des Dachelements 32 befestigbar ist und vorzugsweise mit der Unterseite 38 des Dachelements 32 eine plane Fläche bildet. Das Innere der Halteschiene 58 wird durch eine quer liegende Verengung 82 in einen unteren Aufnahmeraum 84 und einen oberen Aufnahmeraum 86 geteilt. Der untere Aufnahmeraum 84 und der obere Aufnahmeraum 86 definieren somit zwei beieinander liegende Gleitebenen, die für unterschiedliche lösbare Vorrichtung zur Ladungssicherung oder zur Laderaumtrennung verwendet werden können.

Gemäß Fig. 7A wird eine modulare Trennwand 70, die aus einem Trennwandkörper 72 mit darüber liegendem Anschlussprofil 74 besteht, mittels eines querschnittsverjüngten Abschnitts 76 in den Innenraum der oberen Halteschiene 58 eingeführt. Durch Anheben der modularen Trennwand 70 können nicht gezeigte Führungselemente in den unteren Halteschienen 50 gelöst werden, so dass die modulare Trennwand 70 entnommen werden kann.

In Fig. 7B ist ein zweites Ausführungsbeispiel gezeigt. Dabei wird eine Absperrstange 78 an ihrer der oberen Halteschiene 58 zugewandten Seite mit einem Nutenstein 80 versehen, um die Absperrstange in den unteren Aufnahmeraum 84 einführen bzw. entnehmen zu können. Auf der gegenüber liegenden Seite wäre eine ähnliche Führung in der unteren Halteschiene 50 auf fachübliche Weise möglich.

In Fig. 7C ist die Verwendung eines mit einer Schraube 88 verbundenen Nutenstein 80 in Alleinstellung gezeigt.

In Fig. 7D wird eine Schraube 90 mit ihrem Schraubenkopf in den unteren Aufnahmeraum 84 eingebracht.

In Fig. 7E ist im oberen Aufnahmeraum 86 ein mittels einer Schraube 92 befestigter Polyamidgleiter 94 geführt.

Ähnlich zu dieser Ausführungsform ist in Fig. 7F ein mit der Schraube 92 geführter Rollwagen 96 im Inneren des oberen Aufnahmeraums 86 geführt.

Gemeinsam ist diesen Ausführungsformen, dass starre Führungen, wie z. B. der Nutenstein 80 oder der Schraubenkopf der Schraube 90 im unteren Aufnahmeraum 84 geführt sind, und dort mittels Klemmung gehalten sind. Bewegliche Führungen werden im Gegensatz dazu im oberen Aufnahmeraum 86 geführt. Somit können eventuell entstehende Verschleißstellen im unteren Aufnahmeraum 84 keinen zusätzlichen Abrieb der beweglichen Führungen erzeugen.

Unter Bezugnahme auf Fig. 8A ist nochmals eine einfachere Ausführungsform einer oberen Halteschiene 58' gezeigt. Hier wird der Rollwagen 96 im Inneren einer einzelnen Gleitebene geführt.

Im Gegensatz dazu ist die Ausgestaltung der oberen Halteschiene 58 mit zwei Gleitebenen ausgeführt, so dass beispielhaft wiederum der Rollwagen 96 im oberen Aufnahmeraum 86 geführt ist. Die untere Halteschiene 50 wird hierbei typischerweise einfacher ausgeführt sein, wobei hier auch auf konventionelle, aufgeklebte Profile zurückgegriffen werden könnte.

Zusammen mit den erfindungsgemäßen Seitenwandelementen, den weiteren Profilelementen lässt sich nun mittels der oberen Halteschienen 58 und der unteren Halteschienen 50 im Dachelement 32 bzw. im Bodenelement 24 ein Kühlfahrzeugaufbau schaffen, der bereits während des Zusammensetzens der einzelnen Elemente mit sämtlichen Ausbauvarianten bereitgestellt werden kann. Nach Anbringen einer stirnseitigen Abschlusswand bzw. einer Heckklappe kann der so hergestellte Kühlfahrzeugaufbau auf einem Fahrgestell eines Fahrzeugs montiert werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Seitenwandelement für einen Kühlfahrzeugaufbau, bei dem zur Isolation zwischen gegenüberliegenden und Innen- und Außenflächen bildenden Deckschichten (10, 12) Dämmmaterial (14) angeordnet ist und bei dem an einem einer Unterkante des Wandelements (2) zugewandten Abschnitt ein unteres Verbindungselement (4) mit einem flächenhaften ersten Teilelement (6) zum Anschluss an die die Innenfläche bildende Deckschicht (12) und einem aus der Innenfläche herausführenden und mit dem ersten Teilelement (6) einen Schenkel bildenden zweiten Teilelement (8) zum Anschluss an ein Bodenelement (24) des Kühlfahrzeugaufbaus vorgesehen ist, wobei sich das erste Teilelement (6) an die innenliegende Deckschicht (12) stufenlos und mit der Deckschicht (12) eine plane Fläche bildend anschließt und das zweite Teilelement (8) mit dem einen Fahrzeugboden des Kühlfahrzeugaufbaus bildenden Bodenelement (24) verbindbar ist,
**dadurch gekennzeichnet, dass**
zur Fixierung des unteren Verbindungselements (4) wenigstens das erste Teilelement (6) auf seiner Rückseite (16) mit Halteelementen (18) versehen ist, die bezüglich der Rückseite (16) des ersten Teilelements (6) Hinterschnitte bilden, die durch ein Schäumen mit dem Dämmmaterial (14) gefüllt sind, sodass die Halteelemente (18) nach Aushärten innerhalb des Dämmmaterials (14) zu liegen kommen und durch einen Schaumkern des Dämmmaterials (14) gehalten werden.

2. Seitenwandelement nach Anspruch 1, bei dem das an einem einer Oberkante des Wandelements (2) zugewandten weiteren Abschnitt mit einem oberen Verbindungselement (4') mit einem flächenhaften weiteren ersten Teilelement (6') zum Anschluss an die die Innenfläche bildende Deckschicht (12) und einem aus der Innenfläche herausführenden und mit dem weiteren ersten Teilelement (6') einen Schenkel bildenden weiteren zweiten Teilelement (8') zum Anschluss an ein Dachelement (32) des Kühlfahrzeugaufbaus geeignet ist, wobei sich das weitere erste Teilelement (6') an die innenliegende Deckschicht (12) stufenlos und mit der Deckschicht (12) eine plane Fläche bildend anschließt und das weitere zweite Teilelement (8') mit dem eine Fahrzeugdecke des Kühlfahrzeugaufbaus bildenden Dachelement (32) verbindbar ist.

3. Seitenwandelement nach Anspruch 1 und 2, bei dem das zweite Teilelement (8) des unteren Verbindungselements (4) auf einer Oberseite (26) des Bodenelements (24) und/oder bei dem das zweite Teilelement (8') des oberen Verbindungselements (4') auf einer Unterseite (38) des Dachelements (34) befestigbar, vorzugsweise verklebbar oder verschweißbar ist.

4. Seitenwandelement nach Anspruch 1 und 2, bei dem das zweite Teilelement (8) des unteren Verbindungselements (4) mit der Oberseite (26) des Bodenelements (24) und/oder bei dem das zweite Teilelement (8') des oberen Verbindungselements (4') mit der Unterseite (38) des Dachelements (34) eine plane Fläche bildet.

5. Seitenwandelement nach einem der Ansprüche 1 bis 4, bei dem das erste Teilelement (6) oder das weitere erste Teilelement (6') am oberen Verbindungselement (4') und/oder unteren Verbindungselement (4) auf der vom zweiten Teilelement (8; 8') abgewandten Seite mit einer Haltenut (22) versehen ist, in den ein in Richtung des Dämmmaterials (14) abgewinkeltes Ende (46) der innenliegenden Deckschicht (12) eingreifen kann.

6. Seitenwandelement nach einem der Ansprüche 1 bis 4, bei dem das erste Teilelement (6) oder das weitere erste Teilelement (6') am oberen Verbindungselement (4') und/oder unteren Verbindungselement (4) auf der vom zweiten Teilelement (8; 8') abgewandten Seite in die innenliegenden Deckschicht (12) einhängbar oder einführbar ist.

7. Seitenwandelement nach einem der Ansprüche 1 bis 6, bei dem das weitere erste Teilelement (6') am oberen Verbindungselement (4') mit hinterschnittenen Halteelementen (18) versehen ist, die in das Dämmmaterial (14) eingreifen und von diesem umgeben sind.

8. Seitenwandelement nach einem der Ansprüche 1 bis 7, bei dem das untere Verbindungselement (4) und/oder das obere Verbindungselement (4') so ausgebildet sind, dass deren erstes Teilelement (6) oder das weitere erste Teilelement (6') entlang der Längsrichtung des Kühlfahrzeugaufbaus das Wandelement (2) vollständig überdeckt.

9. Seitenwandelement nach einem der Ansprüche 1 bis 8, bei dem eine Höhe des ersten Teilelements (6) oder das weitere erste Teilelement (6') des unteren Verbindungselements (4) so gewählt ist, dass das untere Verbindungselement (4) eine Scheuerleiste bildet.

10. Seitenwandelement nach einem der Ansprüche 1 bis 9, bei dem ein unteres Außenverbindungselement (40) mit einem weiteren flächenhaften ersten Teilelement (42) zum Anschluss an die die Außenfläche bildende Deckschicht (10) und einem aus der Außenfläche herausführenden und mit dem weiteren ersten Teilelement (42) einen Schenkel bildenden weiteren zweiten Teilelement (44) zum Anschluss an das Bodenelement (24) des Kühlfahrzeugaufbaus geeignet ist, wobei sich das erste Teilelement (42) an die außenliegende Deckschicht (10) stufenlos und mit der Deckschicht (12) eine plane Fläche bildend anschließt und das zweite Teilelement (44) mit dem Bodenelement (24) des Fahrzeugboden des Kühlfahrzeugaufbaus verbindbar ist.

11. Seitenwandelement nach einem der Ansprüche 1 bis 10, bei dem ein oberes Außenverbindungselement (52) mit einem weiteren flächenhaften ersten Teilelement (54) zum Anschluss an die die Außenfläche bildende Deckschicht (10) und einem aus der Außenfläche herausführenden und mit dem weiteren ersten Teilelement (54) einen Schenkel bildenden weiteren zweiten Teilelement (56) zum Anschluss an das Dachelement (32) des Kühlfahrzeugaufbaus geeignet ist, wobei sich das erste Teilelement (54) an die außenliegende Deckschicht (10) stufenlos und mit der Deckschicht (12) eine plane Fläche bildend anschließt und das zweite Teilelement (56) mit dem Dachelement (32) der Fahrzeugdecke des Kühlfahrzeugaufbaus verbindbar ist.

12. Seitenwandelement nach einem der Ansprüche 1 bis 11, bei dem das erste Teilelement (6; 42; 54) sowie das weitere erste Teilelement (6') und das zweite Teilelement (8; 44; 56) sowie das weitere zweite Teilelement (8') des unteren Verbindungselements (4), des oberen Verbindungselements (4'), des unteren Außenverbindungselements (40) oder des oberen Außenverbindungselements (52) einstückig geformt sind.

13. Seitenwandelement nach einem der Ansprüche 1 bis 11, bei dem das erste Teilelement (6; 42; 54) sowie das weitere erste Teilelement (6') und das zweite Teilelement (8; 44; 56) sowie das weitere zweite Teilelement (8') des unteren Verbindungselements (4), des oberen Verbindungselements (4'), des unteren Außenverbindungselements (40) oder des oberen Außenverbindungselements (52) zusammenfügbar, vorzugsweise steckbar oder verschraubbar sind.

14. Seitenwandelement nach einem der Ansprüche 1 bis 13, bei dem zwischen dem oberen Verbindungselement (4') und dem unteren Verbindungselement (4) wenigstens ein Profilelement (60; 60') vorgesehen ist, das so in das Seitenwandelement (2) eingefügt ist, dass es sich ohne eine Stufe zu bilden, an die innenliegende Deckschicht (12) darüber bzw. darunterliegend anfügt.

15. Seitenwandelement nach Anspruch 14, bei dem das Profilelement (60; 60') zur Ladungssicherung oder als Schutzleiste ausgebildet ist, wobei das Profilelement (60; 60') an einer Längsseite mit einer Haltenut (22) versehen ist, in die abgewinkelte Enden der innenliegenden Deckschicht (10) eingreifen können, oder das Profilelement (60; 60') an einer Längsseite in die innenliegenden Deckschicht (10) einführbar oder einhängbar ist, wobei das Profilelement (60; 60') vorzugsweise mit hinterschnittenen Halteelementen (18) versehen ist, die in das Dämmmaterial (14) eingreifen und von diesem umgeben sind.

## Claims

1. Side wall element for a refrigerated vehicle body, in which insulating material (14) is arranged for insulation between opposite cover layers (10, 12) which form inner and outer surfaces, and in which, on a section facing a lower edge of the wall element (2), a lower connecting element (4) is provided with a planar first sub-element (6) to connect to the cover layer (12) forming the inner surface and a second sub-element (8) projecting out from the inner surface and forming an angle with the first sub-element (6) to connect to a floor element (24) of the refrigerated vehicle body, the first sub-element (6) connecting to the inner cover layer (12) in a stepless manner and forming a flat surface with the cover layer (12), and the second sub-element (8) being connectable to the floor element (24) forming a vehicle floor of the refrigerated vehicle body, **characterized in that**, for fixing the lower connecting element (4), at least the first sub-element (6) is provided on its rear side (16) with retaining elements (18) which form undercuts with respect to the rear side (16) of the first sub-element (6) which are filled with the insulating material (14) by foaming, so that after curing, the retaining elements (18) come to lie within the insulating material (14) and are retained by a foam core of the insulating material (14).

2. Side wall element according to claim 1, in which the further section facing an upper edge of the wall element (2) with an upper connecting element (4') with a planar further first sub-element (6') to connect to the cover layer (12) forming the inner surface and a further second sub-element (8') projecting out from the inner surface and forming an angle with the further first sub-element (6') is suitable to connect to a roof element (32) of the refrigerated vehicle body, wherein the further first sub-element (6') connects to the inner cover layer (12) in a stepless manner and forms a flat surface with the cover layer (12), and wherein the further second sub-element (8') can be connected to the roof element (32) forming a vehicle roof of the refrigerated vehicle body.

3. Side wall element according to claim 1 and claim 2, in which the second sub-element (8) of the lower connecting element (4) can be fastened, preferably bonded or welded on an upper side (26) of the floor element (24) and/or in which the second sub-element (8') of the upper connecting element (4') can be fastened, preferably bonded or welded on a lower side (38) of the roof element (34).

4. Side wall element according to claim 1 and claim 2, in which the second sub-element (8) of the lower connecting element (4) forms a flat surface with the upper side (26) of the floor element (24) and/or in which the second sub-element (8') of the upper connecting element (4') forms a flat surface with the lower side (38) of the roof element (34).

5. Side wall element according to any one of claims 1 to 4, in which the first sub-element (6) or the further first sub-element (6'), on the upper connecting element (4') and/or lower connecting element (4), is provided with a retaining groove (22) on the side facing away from the second sub-element (8; 8') into which an end (46) of the inner cover layer (12), angled in the direction of the insulating material (14), can engage.

6. Side wall element according to any one of claims 1 to 4, in which the first sub-element (6) or the further first sub-element (6'), on the upper connecting element (4') and/or lower connecting element (4), can be mounted to or inserted into the inner cover layer (12) on the side facing away from the second sub-element (8; 8').

7. Side wall element according to any one of claims 1 to 6, in which the further first sub-element (6') is provided with undercut retaining elements (18) on the upper connecting element (4'), which engage into and are surrounded by the insulating material (14).

8. Side wall element according to any one of claims 1 to 7, in which the lower connecting element (4) and/or the upper connecting element (4') are formed such that their first sub-element (6) or the further first sub-element (6') completely overlays the wall element (2) along the longitudinal direction of the refrigerated vehicle body.

9. Side wall element according to any one of claims 1 to 8, in which a height of the first sub-element (6) or the further first sub-element (6') of the lower connecting element (4) is selected such that the lower connecting element (4) forms a baseboard.

10. Side wall element according to any one of claims 1 to 9, in which a lower outer connecting element (40) with a further planar first sub-element (42) is suitable to connect to the cover layer (10) forming the outer surface and a further second sub-element (42) projecting out from the outer surface and forming an angle with the further second sub-element (44) is suitable to connect to the floor element (24) of the refrigerated vehicle body, wherein the first sub-element (42) is connected in a stepless manner to the outer cover layer (10) and forms a flat surface with the cover layer (12) and the second sub-element (44) can be connected to the floor element (24) of the vehicle floor of the refrigerated vehicle body.

11. Side wall element according to any one of claims 1 to 10, in which an upper outer connecting element (52) with a further planar first sub-element (54) is suitable to connect to the cover layer (10) forming the outer surface and a further second sub-element (56) projecting out from the outer surface and forming an angle with the further first sub-element (54) is suitable to connect to the roof element (32) of the refrigerated vehicle body, wherein the first sub-element (54) connects to the outer cover layer (10) in a stepless manner and forms a flat surface with the cover layer (12), and the second sub-element (56) can be connected to the roof element (32) of the vehicle roof of the refrigerated vehicle body.

12. Side wall element according to any one of claims 1 to 11, in which the first sub-element (6; 42; 54) as well as the further first sub-element (6') and the second sub-element (8; 44; 56) as well as the further second sub-element (8') of the lower connecting element (4), the upper connecting element (4'), the lower outer connecting element (40) or the upper outer connecting element (52) are formed in one piece.

13. Side wall element according to any one of claims 1 to 11, in which the first sub-element (6; 42; 54) as well as the further first sub-element (6') and the second sub-element (8; 44; 56) as well as the further second sub-element (8') of the lower connecting element (4), the upper connecting element (4'), the lower outer connecting element (40) or the upper outer connecting element (52) can be joined together, preferably plugged or screwed.

14. Side wall element according to any one of claims 1 to 13, in which between the upper connecting element (4') and the lower connecting element (4) at least one profile element (60; 60') is provided, which is inserted into the side wall element (2) such that it attaches, above or below, to the inner cover layer (12) without forming a step.

15. Side wall element according to claim 14, in which the profile element (60; 60') is designed for securing loads or as a protective strip, the profile element (60; 60') being provided on one longitudinal side with a retaining groove (22) into which the angled ends of the inner cover layer (10) can engage, or the profile element (60; 60') can be inserted or mounted into the inner cover layer (10) on one longitudinal side, the profile element (60; 60') preferably being provided with undercut retaining elements (18), which engage into and are surrounded by the insulating material (14).

## Revendications

1. Élément de paroi latérale pour une construction de véhicule frigorifique, dans lequel, un matériau isolant (14) est disposé à des fins d'isolation entre des couches de recouvrement (10, 12) formant des surfaces extérieure et intérieure opposées, et dans lequel un élément de liaison inférieur (4) comportant un premier élément partiel (6) plat pour la liaison avec la couche de recouvrement (12) formant la surface intérieure et un second élément partiel (8) partant de la surface intérieure et formant une branche avec le premier élément partiel (6) pour la liaison avec un élément de plancher (24) de la construction de véhicule frigorifique est prévu sur une section orientée vers un bord inférieur de l'élément de paroi (2), dans lequel le premier élément partiel (6) est relié de manière continue à la couche de recouvrement (12) intérieure et forme une surface plane avec la couche de recouvrement (12), et le second élément partiel (8) peut être relié à l'élément de plancher (24) formant un plancher de la construction de véhicule frigorifique, **caractérisé en ce qu'**au moins le premier élément partiel (6) est pourvu sur son côté arrière (16) d'éléments de retenue (18) pour la fixation de l'élément de liaison inférieur (4), lesquels éléments de retenue forment des contre-dépouilles par rapport au côté arrière (16) du premier élément partiel (6), lesquelles contre-dépouilles sont remplies de matériau isolant (14) par moussage, de sorte que les éléments de retenue (18) viennent se loger à l'intérieur du matériau isolant (14) après durcissement et sont maintenus par un noyau de mousse du matériau isolant (14).

2. Élément de paroi latérale selon la revendication 1, dans lequel l'autre section orientée vers un bord supérieur de l'élément de paroi (2) comportant un élément de liaison supérieur (4') avec un autre premier élément partiel (6') plat pour la liaison avec la couche de recouvrement (12) formant la surface intérieure, et comportant un autre second élément partiel (8') partant de la surface intérieure et formant une branche avec l'autre premier élément partiel (6') est appropriée pour la liaison avec un élément de toit (32) de la construction de véhicule frigorifique, dans lequel l'autre premier élément partiel (6') est relié en continu à la couche de recouvrement (12) intérieure et forme une surface plane avec la couche de recouvrement (12), et l'autre second élément partiel (8') peut être relié à l'élément de toit (32) formant un plafond de la construction de véhicule frigorifique.

3. Élément de paroi latérale selon les revendications 1 et 2, dans lequel le second élément partiel (8) de l'élément de liaison inférieur (4) peut être fixé, de préférence collé ou soudé à un côté supérieur (26) de l'élément de plancher (24), et/ou dans lequel le second élément partiel (8') de l'élément de liaison supérieur (4') peut être fixé, de préférence collé ou soudé à un côté inférieur (38) de l'élément de toit (34).

4. Élément de paroi latérale selon les revendications 1 et 2, dans lequel le second élément partiel (8) de l'élément de liaison inférieur (4) forme une surface plane avec le côté supérieur (26) de l'élément de plancher (24) et/ou dans lequel le second élément partiel (8') de l'élément de liaison supérieur (4') forme une surface plane avec le côté inférieur (38) de l'élément de toit (34).

5. Élément de paroi latérale selon l'une des revendications 1 à 4, dans lequel le premier élément partiel (6) ou l'autre premier élément partiel (6') est pourvu, au niveau de l'élément de liaison supérieur (4') et/ou au niveau de l'élément de liaison inférieur (4), sur le côté opposé au second élément partiel (8 ; 8'), d'une rainure de retenue (22) dans laquelle une extrémité (46) de la couche de recouvrement (12) intérieure coudée dans le sens du matériau isolant (14) peut entrer en prise.

6. Élément de paroi latérale selon l'une des revendications 1 à 4, dans lequel le premier élément partiel (6) ou l'autre premier élément partiel (6') peut être suspendu ou inséré dans la couche de recouvrement (12) intérieure au niveau de l'élément de liaison supérieur (4') et/ou au niveau de l'élément de liaison inférieur (4) sur le côté opposé au second élément partiel (8 ; 8').

7. Élément de paroi latérale selon l'une des revendications 1 à 6, dans lequel l'autre premier élément partiel (6') est pourvu, au niveau de l'élément de liaison supérieur (4'), d'éléments de retenue (18) en contre-dépouille qui entrent en prise dans le matériau isolant (14) et sont entourés par celui-ci.

8. Élément de paroi latérale selon l'une des revendications 1 à 7, dans lequel l'élément de liaison inférieur (4) et/ou l'élément de liaison supérieur (4') sont conçus de sorte que leur premier élément partiel (6) ou l'autre premier élément partiel (6') recouvre entièrement l'élément de paroi (2) dans le sens longitudinal de la construction de véhicule frigorifique.

9. Élément de paroi latérale selon l'une des revendications 1 à 8, dans lequel une hauteur du premier élément partiel (6) ou de l'autre premier élément partiel (6') de l'élément de liaison inférieur (4) est choisie de sorte que l'élément de liaison inférieur (4) forme un carrelage.

10. Élément de paroi latérale selon l'une des revendications 1 à 9, dans lequel un élément de liaison extérieur inférieur (40) comportant un autre premier élément partiel (42) plat est approprié pour la liaison avec la couche de recouvrement (10) formant la surface extérieure et comportant un autre second élément partiel (44) partant de la surface extérieure et formant une branche avec l'autre premier élément partiel (42) est approprié pour la liaison avec l'élément de plancher (24) de la construction de véhicule frigorifique, dans lequel le premier élément partiel (42) est relié de manière continue à la couche de recouvrement (10) extérieure et de manière à former une surface plane avec la couche de recouvrement (12), et le second élément partiel (44) peut être relié à l'élément de plancher (24) du plancher de véhicule de la construction de véhicule frigorifique.

11. Élément de paroi latérale selon l'une des revendications 1 à 10, dans lequel un élément de liaison extérieur supérieur (52) comportant un autre premier élément partiel (54) plat est approprié pour la liaison avec la couche de recouvrement (10) formant la surface extérieure et comportant un autre second élément partiel (56) partant de la surface extérieure et formant une branche avec l'autre premier élément partiel (54) est approprié pour la liaison avec l'élément de toit (32) de la construction de véhicule frigorifique, dans lequel le premier élément partiel (54) est relié de manière continue à la couche de recouvrement (10) extérieure et de manière à former une surface plane avec la couche de recouvrement (12), et le second élément partiel (56) peut être relié à l'élément de toit (32) du plafond de véhicule de la construction de véhicule frigorifique.

12. Élément de paroi latérale selon l'une des revendications 1 à 11, dans lequel le premier élément partiel (6 ; 42 ; 54) et l'autre premier élément partiel (6') et le second élément partiel (8 ; 44 ; 56) et l'autre second élément partiel (8') de l'élément de liaison inférieur (4), de l'élément de liaison supérieur (4'), de l'élément de liaison extérieur inférieur (40) ou de l'élément de liaison extérieur supérieur (52) sont réalisés d'un seul tenant.

13. Élément de paroi latérale selon l'une des revendications 1 à 11, dans lequel le premier élément partiel (6 ; 42 ; 54) et l'autre premier élément partiel (6') et le second élément partiel (8 ; 44 ; 56) et l'autre second élément partiel (8') de l'élément de liaison inférieur (4), de l'élément de liaison supérieur (4'), de l'élément de liaison extérieur inférieur (40) ou de l'élément de liaison extérieur supérieur (52) peuvent être assemblés, de préférence par emboîtement ou par vissage.

14. Élément de paroi latérale selon l'une des revendications 1 à 13, dans lequel au moins un élément profilé (60 ; 60') est prévu entre l'élément de liaison supérieur (4') et l'élément de liaison inférieur (4), lequel élément profilé est inséré dans l'élément de paroi latérale (2) de sorte qu'il est relié, sans former de gradin, à la couche de recouvrement (12) intérieure au-dessus ou en-dessous de celle-ci.

15. Élément de paroi latérale selon la revendication 14, dans lequel l'élément profilé (60 ; 60') est conçu pour la fixation d'une charge ou comme bande de protection, dans lequel l'élément profilé (60 ; 60') est pourvu sur un côté longitudinal d'une rainure de retenue (22) dans laquelle des extrémités coudées de la couche de recouvrement intérieure (10) peuvent entrer en prise, ou l'élément profilé (60 ; 60') peut être inséré ou suspendu dans la couche de recouvrement (10) intérieure sur un côté longitudinal, dans lequel l'élément profilé (60 ; 60') est de préférence pourvu d'éléments de retenue (18) en contre-dépouille qui entrent en prise dans le matériau isolant (14) et sont entourés par celui-ci.
